# EUROPÄISCHE PATENTSCHRIFT

(11) **EP 2 599 379 B1**
(45) Veröffentlichungstag und Bekanntmachung des Hinweises auf die Patenterteilung: **15.10.2014**
(21) Anmeldenummer: 12195148.7
(22) Anmeldetag: 30.11.2012
(51) Int. Cl.: A01F 25/16

(54) **Abdecksystem**
Covering system
Système de recouvrement

(30) Priorität: 02.12.2011 DE 202011108678 U
(43) Veröffentlichungstag der Anmeldung: 05.06.2013
(73) Patentinhaber: AgroCom GmbH, 88410 Bad Wurzach (DE)
(72) Erfinder: Burkhart, Rainer, 88410 Bad Wurzach (DE)
(74) Vertreter: Pfister, Stefan Helmut Ulrich

(56) Entgegenhaltungen:
- EP-A1- 2 317 155
- DE-A1- 3 839 072
- DE-A1- 10 123 723
- US-A- 3 991 718

## Beschreibung

Die Erfindung betrifft ein Abdecksystem für die Konservierung von Biomaterial (Silage) mit minimal erforderlicher Anzahl von Abdeckplanen, reduziertem Arbeitsaufwand und ohne zusätzliche Beschwerungsmittel, nach dem Oberbegriff des Patentanspruches 1. Ein Verfahren zum Abdecken und Abdichten von Siloanlagen ist z.B. aus DE 101 23 723 A1 bekannt. Die in der Land- u. Agrarwirtschaft erzeugten Biomaterialen (Gräser, Mais usw.) werden nach der Ernte bis zur Verwendung in der Viehhaltung und/oder für den Einsatz im Biogasbetrieb in Silagen gelagert. Die Lagerstätten werden nach dem Einbringen sofort luftdicht verschlossen, um die Konservierung der Biomaterialien sicherzustellen und Verluste durch Schimmelbildung und Fäulnis zu vermeiden. Das luftdichte Verschließen verhindert des weiteren ein Eindringen von Regenwasser. Als Verschluss werden so genannte Siloabdeck-Systeme verwendet, die üblicherweise aus übereinander liegenden Folien/Planen bzw. Layer bestehen. Diese konservieren und schützen. Zur Sicherung (Wind, Sturm) wird die Oberfläche mit schweren Materialien wie Sandsäcken, alten Autoreifen oder ähnlichem beschwert.

Das heute üblicherweise verwendete System weist folgenden Aufbau auf:
1. Die oberste Schicht, sogenannter Layer4, stellt Beschwerungsmittel wie Sandsäcke oder Autoreifen dar.
2. Darunter liegt die oberste Schutzlage, sogenannter Layer3, die Abdeckplane
3. Darunter liegt eine weitere Schutzfolie, sogenannter Layer2
4. Folie, sogenannter Layer1, die die Silage luftdicht abdeckt
5. Silage
6. Silowand

Layer 1, zum Beispiel PE-Folie 40 - 50 mm dient als luftdichter Verschluss und für die Konservierung von Biomaterial.

Layer 2, zum Beispiel Silofolie 120 - 200 mm, dient als Schutz der PE-Folie (Layer1) gegen UV-Strahlung und gegen minimale mechanische Belastung.

Layer 3, zum Beispiel Abdeckplane (Siloschutzgitter) dient als Schutz von Layer 1 und 2 gegen starke mechanische Beanspruchungen und Beschädigung durch Vögel und andere Tiere.

Layer 4, zum Beispiel Sandsäcke, alte Autoreifen oder ähnliches beschwert Layer 1 - 3 und schützt gegen Wind und Sturm.

Layer 1 hat also die Funktion der Konservierung, Layer 2 - 4 haben zusätzliche Schutz-Funktionen. Layer4 bedeutet arbeitsaufwändiges Auslegen der Sandsäcke oder ähnliches zur Beschwerung (Windschutz) Layer 1 + 2 müssen jährlich entsorgt werden, was eine nicht unerhebliche Belastung für die Umwelt bedeutet.

Der englische Begriff "Layer" ist als Schicht oder Lage zu verstehen, wobei es hierbei nicht auf eine durchgängige Anordnung des jeweiligen Elementes der Lage oder Layer ankommt, sondern der Begriff "Layer" beziehungsweise Lage funktional zu verstehen ist, also die jeweilige Position der einzelnen Layer beziehungsweise Lagen zueinander definiert.

Das Beschweren mit Sandsäcken, alten Autoreifen oder ähnliches ist arbeits- und zeitaufwendig. Zum Entnehmen der Silage beziehungsweise Teile der Silage müssen diese Beschwerungen sowie alle Abdeckungen mühsam entfernt und danach wieder aufgebracht werden.

Ausgehend von diesem Stand der Technik ist es Aufgabe der vorliegenden Erfindung, ein Abdecksystem zu schaffen, das deutlich geringeren Aufwand in seiner Anwendung bedarf, aber gleichwohl den gleichen Schutz der Silage zur Verfügung stellt, wie die bekannten Abdecksysteme.

Dies wird erfindungsgemäß erreicht durch ein System mit nur zwei Layern, wobei der erste, untere Layer aus einer luftdichten Folie, zum Beispiel PE-Folie besteht und der darüber liegende, obere Layer aus einem Vlies, zum Beispiel PP-Geotextil, besteht. In einer bevorzugten Variante wird ein Flächengewicht von mindestens 200 g/m², 300 g/m² oder mindestens 400 g/m², insbesondere mit einem Flächengewicht von 500 g/m² ± 10% vorgesehen. In einer weiteren Variante ist vorgesehen, dass das maximale Flächengewicht 1000 g/m² oder 1500 g/m² beträgt, höhere Flächengewichte werden dann in der Handhabung sehr kompliziert, sind aber vom erfindungsgemäßen Gedanken grundsätzlich nicht ausgeschlossen. Dabei umfasst die Erfindung auch alle Teilintervalle zwischen den jeweiligen Unter- und Obergrenzen, 200 g/m², 300 g/m², 400 g/m² als Untergrenzen und 600 g/m², 800 g/m², 1000 g/m², 1500 g/m² oder 2000 g/m² als Obergrenze des Intervalls. Die untere Lage dient als luftdichter Verschluss zur Konservierung der Silage. Die obere Lage dient zum Schutz der darunter liegenden Abdeckfolie gegen UV-Strahlung und mechanische Beschädigung, zum Beispiel durch Vögel oder andere Tiere. Der Verzicht auf zusätzliche Mittel zur Beschwerung der oberen Abdeckung gegen Wind und Sturm, wird erreicht durch Klettbänder die die Vliesplanen zum Beispiel an den Seiten mit eingelegten Wandvliesen (siehe Skizze 2), die ebenfalls mittels Klettverschluss verbindbar sind oder anderen, klettverschlussfähigen Planen verbindet und fixiert. Je nach Größe der Silage kann die obere Abdeckung aus einer oder mehreren Vliesplanen bestehen. Alle Vliesplanen werden miteinander ebenfalls mittels Klettverschluss verbunden. Lediglich an den Enden könnten zur Sicherung der Abdeckung die Enden mittels Schienen, Beschwerungsmitteln (zum Beispiel sandgefüllte Silosäcke) oder auch anderen Fixiermitteln festgemacht werden, um zusätzliche Sicherheit gegen Windeinflüsse zu erhalten, was bei ordnungsgemäßer Anwendung des Klettverschlusssystems jedoch nicht notwendig ist.

Ein wesentlicher Vorzug des erfindungsgemäßen Vorschlags liegt darin, dass der Landwirt mit deutlich geringerem Arbeitsaufwand eine gleiche effektive Siloabdeckung erreicht. Dies geht einher mit einer entsprechenden Reduktion der Umweltbelastung durch Entsorgung der Kunststofffolien. Auch das zusätzliche Beschweren der obersten Abdeckung mittels Sandsäcken, alten Autoreifen und so weiter ist nicht mehr notwendig und spart auch hier dem Landwirt entsprechend Arbeit. Insbesondere das vollflächige Öffnen und Schließen der Silage, zum Beispiel bei der sogenannten Sandwich-Silage, geht mit dem erfindungsgemäßen Vorschlag sehr viel einfacher, da nur zwei Lagen zu entfernen sind.

Der erfindungsgemäß vorgeschlagene Klettverschluss einzelner oberen, aus Vlies bestehenden Lagen besteht insbesondere darin, dass das verhältnismäßig schwere Vlies bereits sicher und zuverlässig auf dem Silo aufliegt und der flächige Verbund der einzelnen nebeneinanderliegenden Lagen mit dem Klett dem Wind Angriffsflächen nimmt, wo dieser unter dem Stoßbereich eingreifen und Randbereiche der oberen Lage ansonsten anheben könnte. Der erfindungsgemäße Einsatz erlaubt es daher auch, geringe Flächengewichte einzusetzen, insbesondere dann, wenn die Silage nicht so sehr belastet werden soll. Dabei stellt der Klettverbund eine sehr einfache und gleichzeitig zuverlässige, insbesondere wenn dieser auf Querzug belastet wird, Verbindung dar.

Ein weiterer wesentlicher Aspekt der vorliegenden Erfindung ist, dass eine möglichst gute Trennung zwischen dem stark verschmutzten Silowasser und dem auf der unteren Schicht der Siloabdeckung (luft- und wasserdichte Kunststofffolie) auftreffenden Niederschlagswasser erfolgen soll. Grund dafür ist, dass das Silowasser kostenintensiv in separaten Sickergruben gereinigt werden muss, bevor es ins öffentliche Abwasserkanalnetz eingespeist werden darf, wohingegen das Niederschlagswasser, das auf der unteren Schicht der Siloabdeckung auftrifft, ohne weitere Behandlung in das öffentliche Abwasserkanalnetz eingespeist werden darf. Je optimaler diese Trennung zwischen Silowasser und Niederschlagswasser erfolgt, desto kostengünstiger kann ein Silo betrieben werden.

Weitere Aufgabe der vorliegenden Erfindung ist es daher, die auf der Silage liegenden Abdecklagen derart anzuordnen, dass das im Silo ankommende Niederschlagswasser nicht in das Silowasser selbst gerät, sondern getrennt davon in das öffentliche Wasserkanalnetz abgeleitet wird.

Zur Lösung der gestellten weiteren Aufgabe ist vorgesehen, dass die untere Lage als luftdichte Folie derart ausgestaltet ist, dass Oberflächenwasser, insbesondere aus meteorologischem Niederschlag, nicht in die Silage läuft, sondern von der unteren Lage direkt und/oder über mindestens eine Wasserableitung in die kommunale Abwasserkanalisation und/oder in Naturgewässer geleitet wird.

Vorteil ist hierbei, dass durch relativ einfache und kostengünstige konstruktive Maßnahmen an den Abdeckschichten, sowie an den Wänden und gegenenfalls des Fundaments des Silos eine wesentliche Kosteneinsparung erfolgen kann, da nur noch eine geringe Menge an kontaminiertem Silowasser in einer Sickergrube auf dem Bauernhof kostenintensiv direkt geklärt werden muss, das Gros an Niederschlagswasser (Regen, Schnee, Eis und Raureif, Kondenswasser, Spritzwasser etc.) jedoch direkt ohne weitere Aufreinigung ins Abwasserkanalnetz der öffentlichen Kläranlage zugeführt werden kann.

Für die Anordnung der Wasserableitungen sind im Rahmen der vorliegenden Erfindung zahlreiche Möglichkeiten vorgesehen.

So kann die Wasserableitung mindestens an einer Silowand vorgesehen sein, in welche die untere Lage der luft- und wasserdichten Folie dann eingelegt wird. Hierbei kann die Wasserableitung direkt auf der Oberseite der Silowand und/oder seitlich innen und/oder außen an der Silowand vorgesehen sein.

Besonders bevorzugt wird, dass sich die Wasserableitung direkt auf der Oberseite der Silowand befindet, da dann benachbarte Silos eine gemeinsame Wasserableitung verwenden können und somit sich die Kosten nahezu halbieren.

Insbesondere, wenn die Füllhöhe der Silage über die Oberkante der Silowände hinausragen, kann es günstiger sein, dass das Abdecksystem an der Silowand, bevorzugt auf dessen Außenseite, Befestigungselemente umfasst, die zur form- und/oder kraftschlüssigen Festlegung der oberen und/oder unteren Lage dienen. Dabei ist zum Beispiel vorgesehen, dass diese Befestigungselemente direkt oder mittelbar über Leisten an der Silowand gehalten werden, wobei diese längsverlaufend angeordnet sind. Die wasserführende untere Lage wird dabei über die Silowand nach Außen gezogen und das Wasser läuft seitlich ab und versickert in der Anschüttung, die sich außerhalb des Silos an der Silowand anschließt. Eine Befestigung der unteren und/oder oberen Lage erfolgt außerhalb der Silage und stört hier platzmäßig nicht, die untere und/oder obere Lage ist dabei über die Silowand herübergezogen und schützt diese vor Beschädigungen oder Witterungseinflüsse.

Eine Alternative der Anordnung der Wasserableitung sieht vor, dass mindestens im Randbereich des Materials der unteren Lage rinnenförmige Vertiefungen als Wasserableitungen eingeformt sind, wobei die rinnenförmige Vertiefungen mindestens eine Ausleitstelle für das gesammelte Wasser in das öffentliche Kanalnetz aufweisen. Dies ist eine sehr einfache und kostengünstige Möglichkeit, da derartige rinnenförmige Vertiefungen direkt in das Material der unteren Lage zum Beispiel durch Erwärmung und/oder plastische Verformung eingebacht werden können. Auch wäre es möglich, dass die rinnenförmigen Vertiefungen als separate Elemente gleichen oder ähnlichen Kunststoffmaterials mittels Verbinden, zum Beispiel Verkleben, Verschweißen, Vulkanisieren oder Verbinden mit Klettverschluss auf die untere Lage aufgebracht wird. Auch beliebige Kombinationen davon sollen vom Erfindungsgedanken umfasst sein.

Vorteilhaft ist, wenn die rinnenförmigen Vertiefungen gitterförmig über die obere und/oder untere Oberfläche der unteren Lage verteilt sind, so dass damit der Wirkungsgrad der Niederschlagswassersammlung sehr hoch ist, insbesondere bei hohen Niederschlagsmengen von 100 mm/Tag, zum Beispiel bei Sommerregen. Die rinnenförmigen Vertiefungen müssen hierbei elastisch oder plastisch verformbar ausgebildet sein, damit sie sich der Freiformfläche der Silage geeignet anpassen können und damit sich die Folienlage auf eine Wickelwelle auf- und abwickeln lässt.

Eine weitere Alternative sieht vor, dass die Wasserableitung mindestens durch die untere Lage zweier benachbarter Silos als Seitenbegrenzung, sowie durch die gemeinsame Silowand zweier benachbarter Silos gegenenfalls mit einem darauf befindlichen Folienstreifen als Boden gebildet ist. Es bildet sich dann auf der Krone der mittleren Silowand eine rinnenartige Wasserableitung aus. Damit ist die Wasserableitung äußerst kostengünstig herzustellen, da die ohnehin schon vorhandenen Folien der unteren Lagen zweier benachbarter Silos für die beiden Seiten der Wasserableitung genutzt werden und auf der gemeinsamen Silowand nur noch ein Folienstreifen aufgebracht werden muss, der mit den beiden unteren Lagen möglichst wasserdicht verbunden werden soll, zum Beispiel überlappend aufgelegt und mittels quer oder längs verlaufenden Klemm- oder Beschwerungsstangen kraftschlüssig verbunden wird.

Günstig ist, dass an der Wasserableitung Befestigungselemente vorgesehen sind, zur form- und/oder kraftschlüssigen Festlegung der oberen Lage und/oder der unteren Lage des Abdecksystems des Silos.

Die Befestigungselemente sind bevorzugt Klettverschlüsse, die ohnehin bereits zur Verbindung der oberen Vlieslage benötigt werden, so dass kein wesentlich höherer Kostenaufwand betrieben werden muss. Als Variante oder als stabilitätserhöhender Zusatz können Klemmschienen vorgesehen sein und/oder stiftförmige Elemente, welche in das Material selbst oder in dort befindlichen vorgefertigten Öffnungen an den seitlichen Rändern der oberen Lage und/oder der unteren Lage eingeführt sind.

Mindestens die obere Vlieslage wird erfindungsgemäß an der Wasserableitung oder dem außen angeordneten Träger festgelegt und damit wird auch die untere Folienlage durch das Gewicht der oberen Lage ortsfest gehalten. Es können aber auch beide Lagen, die obere Vlieslage und die untere Folienlage, an der Wasserableitung über Formschluss und/oder Kraftschluss festgelegt sein. Formschluss und/oder Kraftschluss müssen natürlich relativ einfach und schnell wiederholt lösbar sein, da in einem Fahrsilo ständig Silage ein- oder ausgebracht werden soll und damit die Lagen durch Auf- und Abrollen auf eine Wickelwelle verkürzt oder verlängert werden müssen. Daher sind die Befestigungen der beiden Lagen in der Wasserableitung nur an einigen Stellen vorgesehen und erstrecken sich zwar im Wesentlichen gleichmäßig verteilt, aber nicht ununterbrochen über die gesamte Länge der Lagen in Aus- oder Einrollrichtung der Lagen gesehen.

Für eine Stabilisierung der Lage der unteren sehr dünnen Folienlage kann es in einer Weiterbildung der Erfindung vorgesehen sein, dass die untere Lage ab Hersteller, vorkonfektionierte, in Rollrichtung gesehen durchgehende oder unterbrochene seitliche Umfaltungen als Schlauchtaschen aufweist, in welche die obere Vlieslage dann vor Ort auf dem Bauernhof einlegbar ist.

In einer Weiterbildung der Erfindung kann auch vorgesehen sein, dass die obere Lage, in Rollrichtung gesehen, ab Hersteller, vorkonfektionierte, in Rollrichtung gesehen durchgehende oder unterbrochene seitliche Umfaltungen als Schlauchtaschen aufweist, über welche die obere Lage mit der Wasserableitung dann vor Ort auf dem Bauernhof einfach und schnell befestigbar ist. Damit ist eine effektive wiederholt lösbare Verbindung der oberen Vlieslage an der Silowand möglich.

Zum schnelleren und kostengünstigeren Aufbau des Silos ist in einer Weiterbildung der Erfindung vorgesehen, dass die untere Lage, in Rollrichtung gesehen, eine unterbrochene seitliche Wandfolie angebracht hat, welche an die Silowand anlegbar ist. Damit kann vor Ort auf dem Bauernhof ein mühsames Einbringen der Wandfolie entfallen und auch ein Vergessen der Montage ist ausgeschlossen oder ein Verrutschen der Wandfolie kann nicht erfolgen. Auch ist damit eine einfache Verlängerung und/oder Erhöhung der Silage im Silo jederzeit sehr schnell und einfach möglich. Die Wandfolie kann sich über die gesamte Höhe der Silowand erstrecken oder nur über den oberen Teil, zum Beispiel über 25 - 30% der Silowand. Die Wandfolie kann über eine Sollbruchstelle (zum Beispiel Perforation) mit der unteren Lage verbunden sein, so dass die Verbindung bei Bedarf vor Ort auch einfach wieder aufgetrennt werden kann.

In einer Weiterbildung der Erfindung ist vorgesehen, dass die obere Lage, in Rollrichtung gesehen, ein unterbrochenes seitliches Wandvlies angebracht hat, welches an die Silowand anlegbar ist. Hier gelten die gleichen Merkmale und Vorteile, wie zuvor bei der Wandfolie beschieben.

In einer bevorzugten Ausführungsform der Erfindung überlappen sich die Teile der unterbrochenen seitlichen Wandfolie und/oder des unterbrochenen seitlichen Wandvlieses in Ausrollrichtung. Damit kann eine günstige Abdichtung ohne Leckagestellen zur Silowand erfolgen.

Zur weiteren Verkürzung der Montagezeit des Silos ist in einer weiteren vorteilhaften Ausführungsform der Erfindung vorgesehen, dass die obere Lage und die untere Lage über zumindest einen Teil deren Kontaktfläche zumindest punktuell form-und/oder kraftschlüssig miteinander verbunden sind.

In der Zeichnung ist die Erfindung insbesondere in einem Ausführungsbeispiel schematisch dargestellt. Es zeigen:
- Figur 1: ein erfindungsgemäßes Abdecksystem im Querschnitt,
- Figur 2: ein Abdecksystem im Querschnitt nach dem Stand der Technik,
- Figur 3: eine vergrößerte Darstellung einer ersten Variante der Anbindung der Layer an der Silowand gemäß der Erfindung,
- Figur 4: eine vergrößerte Darstellung im Querschnitt einer zweiten Variante der Anbindung der Layer an der Silowand gemäß der Erfindung,
- Figur 5: eine vergrößerte Darstellung im Querschnitt einer dritten Variante der Anbindung der Layer an der Silowand gemäß der Erfindung,
- Figur 6: ein erfindungsgemäßes Abdecksystem im Querschnitt mit einer vierten Variante der Anbindung der Layer an der Silowand gemäß der Erfindung,
- Figur 7: eine vergrößerte Darstellung im Querschnitt im Bereich der Mittelsilowand nach Figur 6,
- Figur 8: eine vergrößerte Darstellung im Querschnitt einer fünften Variante der Anbindung der Layer an der Silowand gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

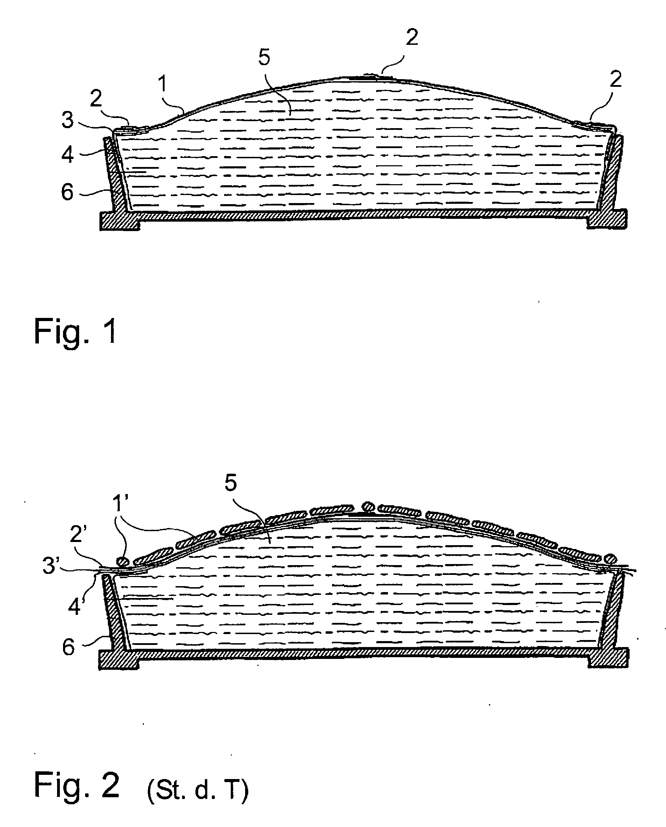

Das heute üblicherweise verwendete System weist folgenden in Figur 2 gezeigten Aufbau auf:

Dabei bedeuten:
1': Die oberste Schicht, sogenannter Layer4, stellt Beschwerungsmittel wie Sandsäcke oder Autoreifen dar.
2': Darunter liegt die oberste Schutzlage, sogenannter Layer3, die Abdeckplane
3': Darunter liegt eine weitere Schutzfolie, sogenannter Layer2
4': Folie, sogenannter Layer1, die die Silage luftdicht abdeckt
5: Silage
6: Silowand

Layer 1, zum Beispiel PE-Folie 40-50 mm dient als luftdichter Verschluss und für die Konservierung von Biomaterial.

Layer 2, zum Beispiel Silofolie 120-200 mm, dient als Schutz der PE-Folie (Layer1) gegen UV-Strahlung und gegen minimale mechanische Belastung.

Layer 3, zum Beispiel Abdeckplane (Siloschutzgitter) dient als Schutz von Layer 1 und 2 gegen starke mechanische Beanspruchungen und Beschädigung durch Vögel und andere Tiere.

Layer 4, zum Beispiel Sandsäcke, alte Autoreifen oder ähnliches beschwert Layer 1-3 und schützt gegen Wind und Sturm.

Layer 1 hat also die Funktion der Konservierung, Layer 2-4 haben zusätzliche Schutz-Funktionen. Layer4 bedeutet arbeitsaufwändiges Auslegen der Sandsäcke oder ähnliches zur Beschwerung (Windschutz) Layer 1 + 2 müssen jährlich entsorgt werden, was eine nicht unerhebliche Belastung für die Umwelt bedeutet.

Den erfindungsgemäßen Aufbau zeigt Figur 1:

Dabei bedeuten:
1: Oberste Abdeckplane, Vliesbahn, sogenannter Layer 2
2: Klettverschluss
3: Folie, sogenannter Layer 1, die die Silage luftdicht abdeckt
4: Wandvlies
5: Silage
6: Silowand

Layer 1, zum Beispiel PE-Folie 40-50 mm dient als luftdichter Verschluss und Konservierung des Biomaterials Layer 2, zum Beispiel PP-Geotextil als gerollte Vliesbahn, hier mehrteilig, dient als Schutz der PE-Folie (Layer 1) gegen UV-Strahlung und gegen mechanische Beanspruchungen und Beschädigung durch Vögel und andere Tiere.

Mittels Klettband werden die Vliesbahnen verkettet und sind damit wind- und sturmsicher fixiert. In der Skizze sind beispielsweise Wandvliese eingelegt, die mit dem oberen Vliesplanen mittels Klettverschluss verbunden werden. Ebenso ist es möglich, die obere Abdeckung zweiteilig auszuführen, wobei die oberen Vliesplanen an den Seiten wie die Wandvliese eingelegt werden (von der Silage eingeklemmt) und die Vliese oben mittels Klettverschluss verbunden werden. Die Anwendung des Klettbandes zur Verkettung des Layer 2 gilt auch für Fahrsilos mit senkrechten Seitenwänden und Silagen auf Siloplatten ohne Seitenwände.

Die Aufteilung in zwei, gegebenenfalls bei sehr großen Silagen auch in noch mehr Einzelplanen, erleichtert den Arbeitsaufwand durch Verwendung kleinerer Planengrößen.

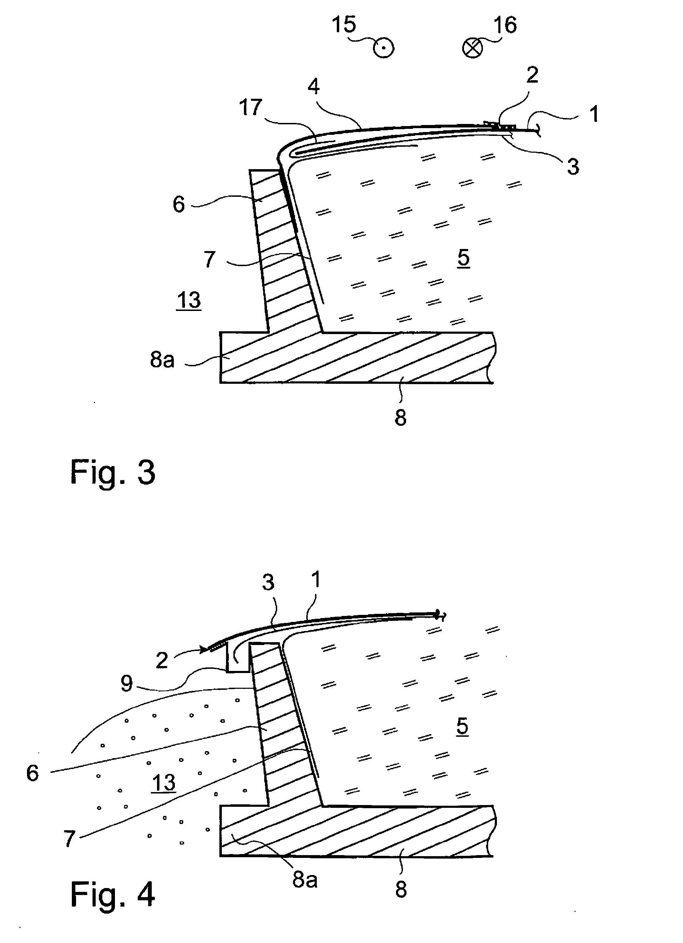

Figuren 3 bis 8 zeigen nun fünf Varianten der Anbindung der Layer 1, 3 an der Silowand 6, 6a und spezielle Ausbildung der Wasserableitung 9-13.

In Figur 3 ist erkennbar, dass sich die Silage 5 im Innern des Silos befindet, wobei das Silo wie an sich bekannt im Querschnitt senkrecht zur Ausrollrichtung 15 und Einrollrichtung 16 der Schichten 1, 3, etwa U-förmig ausgebildet ist. Die Rollrichtungen 15, 16 der Schichten 1, 3 sind gleichzeitig auch die Einfahr- und Ausfahrrichtungen für den Traktor bzw. Be- und Entladerichtungen für die Silage, so dass alle Figuren 1-8 einen Querschnitt quer durch das Silo und senkrecht zu dessen Rollrichtungen 15, 16 beziehungsweise den Be- und Entladerichtungen zeigen. Das Silo weist eine horizontale Fundamentplatte 8 auf, die zwei leicht schräg zur Vertikalen verlaufende Seitenwände 6 besitzt, wobei an die Verbindungsstellen zwischen Fundamentplatte 8 und Seitenwänden 6 in Richtung außerhalb des Siloinneren sich links und rechts je eine Fundamentplatten-Verlängerung 8a anschließt.

Zuerst wird links und rechts im Silo je ein Wandvlies 4, sowie eine Wandfolie 7 an die beiden Silowände 6 angelegt, wobei deren obere Enden zunächst frei über die Silowände 6 gelegt werden. Danach wird die Silage 5 zum Beispiel per Schlepper in den Siloinnenraum eingebracht und dort komprimiert, so dass die Silage 5 das Wandvlies 4 und die Wandfolie 7 an die Silowand 6 presst und die Wandfolie 7 dort möglichst luft- und wasserdicht anliegt. Danach wird von einer Wickelwelle (nicht gezeigt) die untere luft- und wasserdichte Folienschicht 3 abgewickelt, gefolgt von der darüber befindlichen oberen Vliesschicht 1, gegenenfalls gleichzeitig von der gleichen Wickelwelle oder zeitlich nachfolgend von einer anderen Wickelwelle. Danach wird die untere Schicht 3 seitlich umgefaltet, so dass eine Überlappung der Umfaltung 17 von ca. 50-100 cm zwischen den beiden Schichten 1 und 3 entsteht, die ebenfalls als Wasserableitung dienen kann. Danach wird das Wandvlies 4 ins Siloinnere auf die Silage 5 als oberste Deckschicht geklappt und die beiden Vliese 1, 4 werden mittels Klettband 2 zueinander fixiert und winddicht verschlossen.

Wichtig ist nun, dass Niederschlagswasser, das auf den oberen Vliesschichten 1, 4 auftrifft, nach unten hin auf die unteren Folienschichten 3, 7 durchsickert, da das Vliesmaterial wasserdurchlässig ist. Das auf die Folienschichten 3, 7 gelangte Wasser wird nun auf Grund der Füllmenge der Silage 5 über dem Höhenniveau der Oberkante der Silowand 6 über diese auf die Außenseite des Silos und der Silowand 6 geleitet, fließt dort nach unten und trifft dort auf die Wasserableitung 13 in Form einer Kiesschüttung auf oder neben der Silofundamentplatten-Verlängerung 8a auf und versickert dort. Mit dem Bezugszeichen 15 beziehungsweise 16 sind die Wickelrichtungen, die lotrecht zur Blattebene verlaufen, angedeutet, wobei die Wickelrichtung 15 auf den Betrachter zu und die Wickelrichtung 16 von dem Betrachter weg orientiert ist.

Figur 4 zeigt eine andere Variante der Wasserableitung 9, welche am oberen Rand der Siloseitenwand 6 als U-förmige Regenrinne befestigt ist. Hier ist eine Wandfolie 7 auf der Innenseite der Siloseitenwand 6 eingebracht, bevor das Silo mit Silage 5 gefüllt wird und anschließend wird auf die Wandfolie 7 die untere Folienschicht 3 ausgerollt, gefolgt von der oberen Vliesschicht 1. Beide Schichten 1 und 3 sind seitlich so breit, dass sie in den Bereich der Wasserableitung 9 ragen und dort fest liegen. Die untere Folienschicht 3 ist hierbei lediglich in die Wasserableitung 9 eingelegt, ohne dass sie dort befestigt werden muss, da ja die wesentlich schwerere obere Vliesschicht 1 die untere Folienschicht 3 auf die Silage 5 und den oberen Rand der Silowand 6 und der Wasserableitung 9 nieder drückt. Damit kein Wind zwischen Wasserableitung 9 und obere Vliesschicht 1 gelangen kann, wird die obere Vliesschicht 1 mit der Wasserableitung 9 wiederholt lösbar verbunden, hier mittels Klettverschluss 2 an einem schrägen Längsschenkel der Wasserableitung 9. Natürlich kann die obere Vliesschicht 1 auch über beliebige andere form- und/oder kraftschlüssige Verbindungsarten festgelegt werden, wichtig ist nur, dass die Verbindung zum einen wiederholt lösbar ist und zum anderen eben möglichst winddicht ist.

Die gleiche zeichnerische Darstellung wie in Figur 4 ergibt sich auch bei dem zur Erfindung gehörenden Vorschlag, bei welchem eine Mehrzahl von U- oder C-artig gebogenen Haltern an der Außenseite der Silowand 6 vorgesehen sind, die auf der der Silowand 6 abgewandten Seite mittelbar (zum Beispiel über Leisten) oder unmittelbar ein (oder mehrere) Befestigungselement/e 2, zum Beispiel den bekannten Klettverschluss, tragen, an welchen/m die obere Lage 1 haltend angeordnet ist. Das Befestigungselement 2 ist dabei zum Beispiel auf Leisten oder sonstige längslaufende profilartige Elemente, die auf dem Halter angeordnet sind, gehalten. Die untere Lage 3 ist dabei über die Silowandkrone gezogen und leitet zuverlässig das Wasser in das seitlich anstoßende Erdreich.

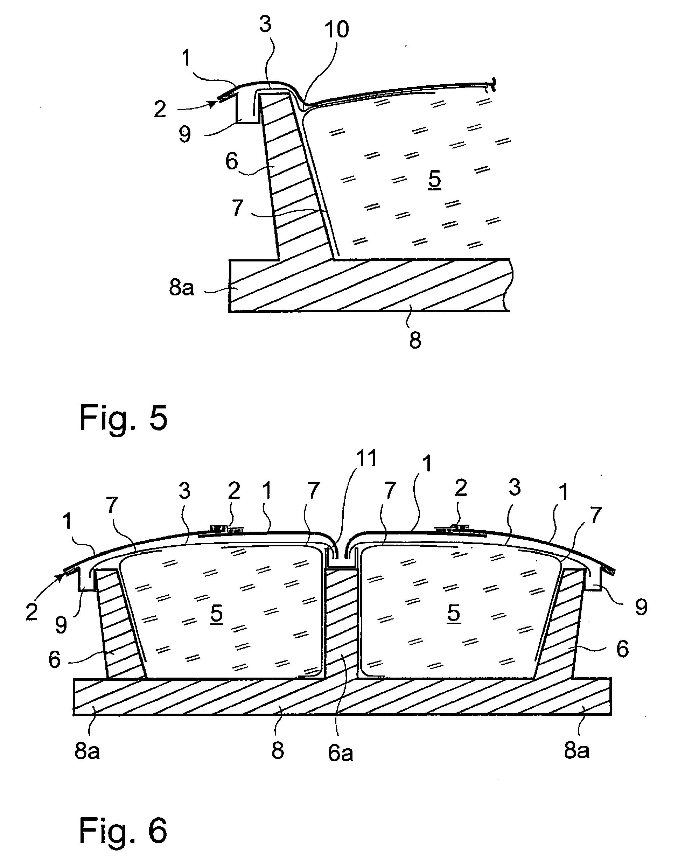

Aus Figur 5 geht hervor, dass bei einem Silageniveau unter der Oberkante der Siloseitenwand 6 zur siloäußeren Wasserableitung 9 eine zusätzliche siloinnere Wasserableitung 10 in Form einer Rinne in der unteren Folienlage 3 gebildet werden muss, welche sich in Rollrichtung 15, 16 erstreckt und am Ende der Abdeckung 1, 3 entweder in eine weitere Rinne in der unteren Folienlage 3 mündet oder aber in einer siloexternen Wasserableitung, die von der Wasserableitung für das Silowasser strikt getrennt ist. Die übrige Anbindung der Layer 1, 3 an der Silowand 6 und Ausbildung der Wasserableitung 9 ist die gleiche oder ähnliche zu der in Figur 4.

Figur 6 stellt einen Doppelsilobehälter dar, der im Unterschied zu den Silos der Figuren 1-5 eine zusätzliche vertikale Mittelsilowand 6a aufweist, welche zwei gleich große Silagevolumina 5 direkt nebeneinander definiert. Jeder dieser beiden einzelnen Silos hat an der Oberseite seiner äußeren Silowand 6 eine gleiche oder ähnliche Anbindung der Layer 1, 3 und Ausbildung der Wasserableitung 9 wie in Figur 5.

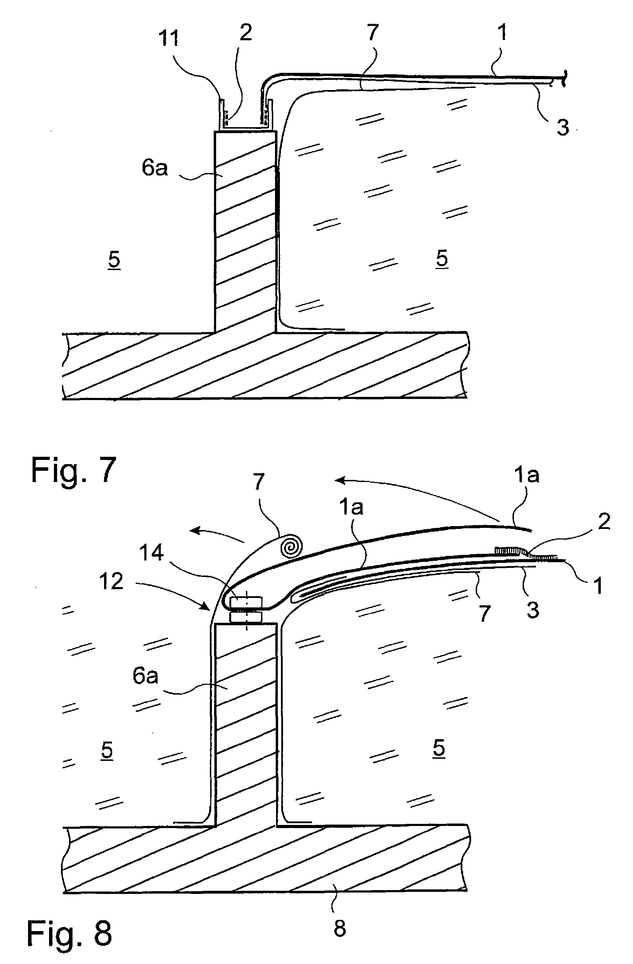

Figur 7 stellt nun eine vergrößerte Detaildarstellung des Bereichs der Mittelsilowand 6a der Figur 6 dar. Im Unterschied zur Wasserableitung 9 der Figur 5 ist die U-förmige Regenrinne 11 der Mittelsilowand 6a aber anders angebracht, nämlich auf der Oberseite der Mittelsilowand 6a, wobei beide Ränder der oberen Vlieslagen 1, sowie der unteren Folienlagen 3 der beiden benachbarten Silos dort hineinragen. Damit kann Niederschlagswasser, welches im Innenbereich der Silos nieder geht, zum einen in die beiden äußeren Wasserableitung 9 der beiden äuβeren Silowände 6 und zum andern in die mittlere gemeinsame Regenrinne 11 (als Wasserableitung) abgeleitet werden.

Figur 8 illustriert eine weitere sehr kostengünstige Alternative einer Wasserableitung 12, welche auf der Mittelsilowand 6a eines Doppelsilos gemäß Figur 6 gebildet ist. Ähnlich wie in Figur 3 auf der Siloaußenwand, sind die Layer 1, 3 und 7 auch in Figur 8 geschichtet, wobei aber kein Wandvlies 7 an der Mittelsilowand 6a entlang geführt ist, sondern eine weitere obere mittlere Vliesschicht 1a über eine Klemmschiene 14 auf der Oberseite der Mittelsilowand 6a hin zum benachbarten Silo des Doppelsilos gelegt ist. In Figur 8 ist nur der rechte Silo mit Silage 5 gefüllt und derart abgedeckt, wobei der linke Silo gerade mit Silage 5 befüllt oder diese daraus entleert wird, so dass die obere Vliesschicht 1a von der linken Silage 5 abgedeckt ist und auf die rechte Abdeckung der Silage 5 des rechten Silos abgelegt und dort zwischengelagert ist. Die Wasserableitung 12 wird hier in der Ausführung nach Figur 8 zwischen den beiden Wandfolien 7 der beiden benachbarten Silos gebildet, sowie der Oberseite der Mittelsilowand 6a, auf welche ein wasserdichter Folienstreifen (nicht dargestellt) aufgelegt werden kann, der durch die Klemmschienen 14 nieder gehalten wird.

Insgesamt wird mit den erfindungsgemäßen Abdeckschichten 1, 3, 7 und Wasserableitungen 9-13 eine in Anschaffung, Betrieb, Wartung und Reparatur kostengünstige Abdeckung für Silos geschaffen, welche zudem sehr umweltschonend ist. Ein wesentlicher Vorzug der Erfindung ist dabei, dass der erfindungsgemäß vorgeschlagene Klett nicht nur zum Verbund der einzelnen Vliesschichten 1 zueinander dient, sondern der Klettverbund auch für eine Festlegung der oberen Lage (Vlieses) im Randbereich, insbesondere im Bereich der Wasserableitungen 9-13 einsetzbar ist.

## Patentansprüche

1. Abdecksystem zum Schutz und zur Konservierung landwirtschaftlicher Produkte wie Biomaterial zur späteren Verwendung oder zur Teilentnahme, bestehend aus mindestens 2 Lagen, wobei die untere Lage als luftdichter Verschluss und die obere Lage als Schutzplane wirkt, **dadurch gekennzeichnet, dass** die obere Lage (1) als Vlies ausgebildet ist, das mittels Klettband (2) verschließ- und fixierbar ist.

2. Abdecksystem nach Anspruch 1, **dadurch gekennzeichnet, dass** die obere Lage (1) durch mehrere Vliesplanen gebildet wird, die mittels Klettband (2) verschließ- und fixierbar sind.

3. Abdecksystem nach einem der vorhergehenden Ansprüche, **dadurch gekennzeichnet, dass** die Vliesoberfläche (1) als Gegenstück zum Klettband (2) ausgebildet ist.

4. Abdecksystem nach einem der vorhergehenden Ansprüche, **dadurch gekennzeichnet, dass** die obere Abdeckung (1) als Vlies so ausgebildet ist, dass sie als Schutz gegen mechanische Beschädigung wirkt und/oder das obere Abdeckvlies (1) als UV-Schutz wirkt.

5. Abdecksystem nach einem der vorhergehenden Ansprüche, **dadurch gekennzeichnet, dass** unter dem oberen Abdeckvlies (1) nur noch eine Lage luftdichter Folie (3) vorhanden ist.

6. Abdecksystem nach einem der vorhergehenden Ansprüche, **dadurch gekennzeichnet, dass** die untere Lage (3) als luftdichte und insbesondere wasserdichte Folie derart ausgestaltet ist, dass dort auftretendes Oberflächenwasser insbesondere aus meteorologischem Niederschlag nicht in die Silage (5) läuft, sondern von der unteren Lage (3) direkt und/oder über mindestens eine Wasserableitung (9, 10, 11, 12, 13) abgeleitet wird.

7. Abdecksystem nach einem der vorhergehenden Ansprüche, **dadurch gekennzeichnet, dass** mindestens an einer Silowand (6, 6a) die Wasserableitung (9, 11) vorgesehen ist, in welche die untere Lage (3) einlegbar ist.

8. Abdecksystem nach einem der vorhergehenden Ansprüche, **dadurch gekennzeichnet, dass** die Wasserableitung (9, 11) auf der Oberseite der Silowand (6a) und/oder seitlich innen und/oder außen im oberen Bereich der Silowand (6) vorgesehen ist.

9. Abdecksystem nach einem der vorhergehenden Ansprüche, **dadurch gekennzeichnet, dass** die Wasserableitung (11) mindestens durch die untere Lage (3) zweier benachbarter Silos als Seitenbegrenzung und die gemeinsame Silowand (6) zweier benachbarter Silos als Boden gegebenenfalls mit einem darauf befindlichen Folienstreifen gebildet ist.

10. Abdecksystem nach einem der vorhergehenden Ansprüche, **dadurch gekennzeichnet, dass** das Abdecksystem an der Silowand (6), bevorzugt auf dessen Außenseite, Befestigungselemente (2, 14) umfasst, zur form- und/oder kraftschlüssigen Festlegung der oberen Lage (1) und/oder der unteren Lage (3), wobei die Befestigungselemente (2, 14) bevorzugt längs, entlang der Silowand (6) verlaufen, mittelbar oder unmittelbar von mehreren Trägern gehalten sind und/oder an der Wasserableitung (9, 11) Befestigungs-elemente (2, 14) vorgesehen sind, zur form- und/oder kraftschlüssigen Festlegung der oberen Lage (1) und/oder der unteren Lage (3).

11. Abdecksystem nach einem der vorhergehenden Ansprüche, **dadurch gekennzeichnet, dass** die Befestigungselemente (2, 14) Klettverschlüsse (2) sind, und/oder vertikal übereinander liegende Klemmschienen (14), und/oder stiftförmige Elemente, welche in das Material oder in Öffnungen an den seitlichen Rändern der oberen Lage (1) und/oder der unteren Lage (3) einführbar sind.

12. Abdecksystem nach einem der vorhergehenden Ansprüche, **dadurch gekennzeichnet, dass** die untere Lage (3), in Rollrichtung (15, 16) gesehen, durchgehende oder unterbrochene seitliche Umfaltungen (17) als Schlauchtaschen aufweist, in welche die obere Lage (1) als Vlies einlegbar ist und/oder die untere Lage (3), in Rollrichtung (15, 16) gesehen, eine unterbrochene seitliche Wandfolie (7) angebracht hat, welche an die Silowand (6) anlegbar ist.

13. Abdecksystem nach einem der vorhergehenden Ansprüche, **dadurch gekennzeichnet, dass** die obere Lage (1), in Rollrichtung (15, 16) gesehen, ein unterbrochenes seitliches Wandvlies (4) angebracht hat, welches an die Silowand (6) anlegbar ist.

14. Abdecksystem nach einem der vorhergehenden Ansprüche, **dadurch gekennzeichnet, dass** die Teile der unterbrochenen seitlichen Wandfolie (7) und/oder des unterbrochenen seitlichen Wandvlieses (4) sich in Rollrichtung (15, 16) überlappen und/oder die obere Lage (1) und die untere Lage (3) über zumindest einen Teil deren Kontaktfläche form- und/oder kraftschlüssig zumindest punktuell miteinander verbunden sind.

15. Abdecksystem nach einem der vorhergehenden Ansprüche, **dadurch gekennzeichnet, dass** mindestens im Randbereich des Materials der unteren Lage (3) rinnenförmige Vertiefungen (10) als Wasserableitungen gebildet und/oder eingeformt sind, welche mindestens eine Ausleitstelle für das gesammelte Wasser aufweisen.

## Claims

1. Covering system for the protection and the conservation of agriculture products such as biomaterials for a later use or partial removal, consisting of at least 2 layers whereas the bottom layer acts as an airproof cover and the top layer acts as a protection canvas, **characterized in that** the top layer (1) is configured as a fleece which can be closed and attached by hook-and-loop tape (2).

2. Covering system according to claim 1, **characterized in that** the top layer (1) is formed by several fleece layers which can be closed and attached by hook-and-loop tape (2).

3. Covering system according to one of the preceding claims, **characterized in that** the fleece surface (1) is configured as a counter part to the hook-and-loop tape (2).

4. Covering system according to one of the preceding claims, **characterized in that** the top cover layer (1) is a fleece configured to acts as a protection against mechanical damaging and/or **in that** the top cover fleece (1) acts as an UV-protection.

5. Covering system according to one of the preceding claims, **characterized in that** only one air tight film (3) exists below the top cover fleece (1).

6. Covering system according to one of the preceding claims, **characterized in that** the bottom layer (3) is configured as an air tight and in particular water tight film such that surface water appearing on that film, in particular as a consequence of meteorological precipitation, does not drained into the silage (5) but be lead by the bottom layer (3) directly and/or indirectly by at least one water drainage (9, 10, 11, 12, 13).

7. Covering system according to one of the preceding claims, **characterized in that** at least at one silo wall (6, 6a) a water draining (9, 11) is provided in which the bottom layer (3) can be placed.

8. Covering system according to one of the preceding claims, **characterized in that** the water drainage (9, 11) is situated on the top part of the silo wall (6a) and/or laterally inside and/or outside in the upper part of the silo wall (6).

9. Covering system according to one of the preceding claims, **characterized in that** the water drainage (11) is formed by at least the bottom layers (3) of two neighboring silos as a lateral limitation and its bottom by the common silo wall (6) of two neighboring silos with, where appropriate, a film tape added thereon.

10. Covering system according to one of the preceding claims, **characterized in that** the covering system comprises attachment elements (2, 14) on the silo wall (6) and preferably on its outside for form locking and/or frictionally connection of the top layer (1) and/or of the bottom layer (3) wherein the attachment elements (2, 14) preferably run longitudinally along the silo wall (6) and are supported directly or indirectly by several support elements and/or **in that** attachment elements (2, 14) are located at the water drainage (9, 11) in order to act through form locking and/or frictionally connection of the top layer (1) and/or of the bottom layer (3).

11. Covering system according to one of the preceding claims, **characterized in that** the attachment elements (2, 14) are hook-and-loop fasteners (2) and/or vertically stacked clamping rails (14) and/or pin shaped elements which can be pinned through the material or through openings in the lateral edges of the top layer (1) and/or the bottom layer (3).

12. Covering system according to one of the preceding claims, **characterized in that** the bottom layer (3), seen in rolling direction (15, 16), possesses a continuous or interrupted lateral folding (17) configured as tube pockets, in which the top layer (1) can be laid into as fleece and/or **in that** the bottom layer (3), seen in rolling direction (15, 16), has attached to it a continuous lateral film (7) which can be mounted onto the silo wall (6).

13. Covering system according to one of the preceding claims, **characterized in that** the top layer (1), seen in rolling direction (15, 16), has attached to it an interrupted lateral wall fleece (4) which can be mounted onto the silo wall (6).

14. Covering system according to one of the preceding claims, **characterized in that** part of the interrupted lateral film (7) and/or of the interrupted lateral wall fleece (4), seen in rolling direction (15, 16), are overlapping each other and/or in that the top layer (1) and the bottom layer (3) are at least over a part of the contact area at least punctually attached to each other in a form locking and/or frictionally connection manner.

15. Covering system according to one of the preceding claims, **characterized in that** at least in the edge region of the material of the bottom layer (3) trough shaped recesses (10) are formed and/or provided as water drainages with at least one evacuation for the collected water.

## Revendications

1. Système de recouvrement destiné à la protection et à la conservation de produits agricoles tels des biomatériaux destinés à une utilisation ultérieure ou à un prélèvement partiel, consistant en au moins deux couches de sorte que la couche inférieure sert comme bâche étanche à l'air et la couche supérieure comme bâche protectrice, **caractérisé en ce que** la couche supérieure (1) est configurée comme une toile non tissée pouvant être fermée et fixée à l'aide d'un ruban-crochets (2).

2. Système de recouvrement selon la revendication 1, **caractérisée en ce que** la couche supérieure (1) est formée de plusieurs toiles non tissées pouvant être fermées et fixées à l'aide de ruban-crochets (2).

3. Système de recouvrement selon un des revendications précédentes, **caractérisé en ce que** la surface de la toile non tissée (1) est configurée comme une contrepartie du ruban-crochets (2).

4. Système de recouvrement selon une des revendications précédentes, **caractérisé en ce que** la bâche supérieure (1) est formée par une toile non tissée et en ce quelle sert comme protection contre un endommagement mécanique et/ou **en ce que** la toile non tissée de recouvrement supérieure (1) sert comme protection anti-UV.

5. Système de recouvrement selon une des revendications précédentes, **caractérisé en ce que** seulement un film étanche à l'air (3) existe en-dessous de la toile non tissée de recouvrement supérieure (1).

6. Système de recouvrement selon une des revendications précédentes, **caractérisé en ce que** la couche inférieure (3) est configurée comme un film étanche à l'air et en particulier comme un film étanche à l'eau de façon à ce que l'eau de surface située à cet endroit et en particulier résultant de précipitations météorologiques est empêchée de couler à l'intérieur de l'ensilage (5) et est évacuée directement par la couche inférieure (3) et/ou indirectement via une canalisation d'évacuation d'eau (9, 10, 11, 12, 13).

7. Système de recouvrement selon une des revendications précédentes, **caractérisé en ce qu'**au niveau d'au moins une paroi de silo (6, 6a) une canalisation d'évacuation d'eau (9, 11) est prévue de façon à pouvoir y placer la couche inférieure (3).

8. Système de recouvrement selon une des revendications précédentes, **caractérisé en ce que** la canalisation d'évacuation d'eau (9, 11) est prévue au niveau de la face supérieure de la paroi de silo (6a) et/ou latéralement à l'intérieur et/ou à l'extérieur au niveau d'une partie supérieure de la paroi de silo (6).

9. Système de recouvrement selon une des revendications précédentes, **caractérisé en ce que** la canalisation d'évacuation d'eau (11) est formée au niveau latéral par au moins la couche inférieure (3) de deux silos voisins et au niveau de son fond par la paroi partagée (6) de deux silos voisins, le cas échéant recouvert d'une bande d'un film.

10. Système de recouvrement selon une des revendications précédentes, **caractérisé en ce que** le système de recouvrement comprend des éléments de fixation (2, 14) au niveau de la paroi de silo (6) et de préférence au niveau extérieur de cette paroi de silo destinés à immobiliser la couche supérieure (1) et/ou de la couche inférieure (3) par un blocage sans jeu et/ou par compression de façon à ce que les éléments de fixation (2, 14) s'étendent de préférence le long de la paroi de silo (6), tenus directement ou indirectement par plusieurs support et/ou **en ce que** des éléments de fixation (2, 14) sont prévus au niveau de la canalisation d'évacuation d'eau (9, 11) destinés à immobiliser la couche supérieure (1) et/ou de la couche inférieure (3) par un blocage sans jeu et/ou par compression.

11. Système de recouvrement selon une des revendications précédentes, **caractérisé en ce que** les éléments de fixation (2, 14) sont des fermetures scratch (2) et/ou des languettes de compression verticalement empilées (14) et/ou des éléments sous forme de tiges pouvant être introduits dans le matériau ou dans des ouvertures des bords latéraux de la couche supérieure (1) et/de la couche inférieure (3).

12. Système de recouvrement selon une des revendications précédentes, **caractérisé en ce que** la couche inférieure (3) possède des bords repliés (17), en direction du roulement (15, 16) continus ou interrompus, formant des poches dans laquelle la couche supérieure (1), une toile non tissée, peut être introduite et/ou **en ce que** la couche inférieure comporte de façon attachée un film mural latéral (7), en direction du roulement (15, 16) continu, lequel peut être plaqué contre la paroi de silo (6).

13. Système de recouvrement selon une des revendications précédentes, **caractérisé en ce que** la couche supérieure (1) comporte de façon attachée une toile non tissée murale latérale (4), en direction de roulement (15, 16) interrompue, laquelle peut être plaquée contre la paroi de silo (6).

14. Système de recouvrement selon une des revendications précédentes, **caractérisé en ce que** les parties du film mural latéral (7) interrompu et/ou de la toile non tissée murale latérale (4) interrompue se chevauchent en direction de roulement (15, 16) et/ou **en ce que** la couche supérieure (1) et la couche inférieure (3) sont au moins ponctuellement liées l'une à l'autre par la forme ou par la force dans des parties de contact commun.

15. Système de recouvrement selon une des revendications précédentes, **caractérisé en ce que** la couche inférieure (3) possède au moins au niveau de sa bordure une canalisation d'évacuation d'eau formée par des creux (10) dus à un pli et/ou à une déformation et au moins un endroit d'évacuation pour l'eau accumulée.
